# EUROPEAN PATENT SPECIFICATION

(11) **EP 2 941 063 B1**
(45) Date of publication and mention of the grant of the patent: **01.11.2017**
(21) Application number: 14166410.2
(22) Date of filing: 29.04.2014
(51) Int. Cl.: H04W 52/02

(54) **Macro-Cell Assisted Small Cell Discovery and Activation**
Makrozellenunterstützte Kleinzellenentdeckung und Aktivierung
Découverte et activation de petites cellules assistées de macrocellules

(43) Date of publication of application: 04.11.2015
(73) Proprietor: NTT Docomo, Inc., Tokyo 100-6150 (JP)
(72) Inventor: Iwamura, Mikio, 80687 München (DE); Ternon, Emmanuel, 80687 München (DE); Agyapong, Patrick, 80687 München (DE)
(74) Representative: Zimmermann, Tankred Klaus

(56) References cited:
- EP-A1- 2 154 921
- EP-A1- 2 536 221
- WO-A1-2012/093088
- WO-A1-2014/056174
- US-A1- 2009 285 143

## Description

The present invention relates to the field of wireless communication networks, especially to the field of heterogeneous networks including small cells having a sleep mode functionality. Embodiments relate to the wake-up of one or more sleeping small cells in a heterogeneous network, e.g. to a macro-cell assisted uplink signaling-based small cell discovery and activation.

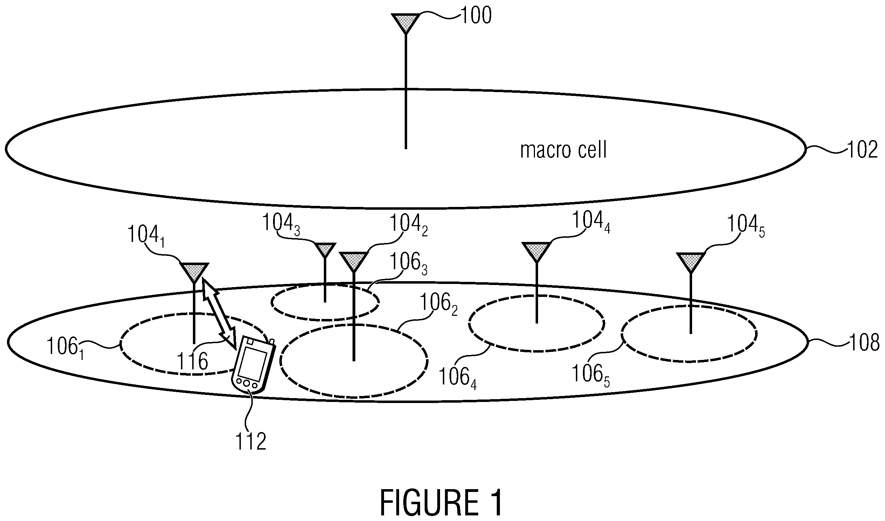

Fig. 1 shows an exemplary heterogeneous network comprising two overlaid networks. One of the two overlaid networks may be a macro network layer, and the other one of the two overlaid networks may be a small cell layer. The macro network layer includes one or more macro cells, each including a macro base station (MeNB). Fig. 1 schematically shows a single MeNB 100. The macro cells operate in currently existing frequency bands, for example in the 2 Gigahertz frequency band, using currently standardized systems like LTE/LTE-A and also guarantee backwards compatibility for legacy user equipments (UEs or mobile stations), i.e., such UEs which just support the current standards. Fig. 1 further shows the small cell layer comprising a plurality of small cell base stations (SeNB) 104₁ to 104₅ each operating within respective areas 106₁ to 106₅ (also referred to as coverage area) defining the small cells. The SeNBs 104₁ to 104₅ defining the small cells 106₁ to 106₅ may operate in frequency bands different from the frequency bands used in the macro network layer, for example in higher frequency bands, like the 3-5 Gigahertz band. Fig. 1 further shows a user equipment 112 receiving control signals from the MeNB 100 as is schematically depicted by arrow 114 and that communicates user data signals via one of the small cells as is depicted by arrow 116. Such UEs support dual connectivity to both a macro cell and a small cell.

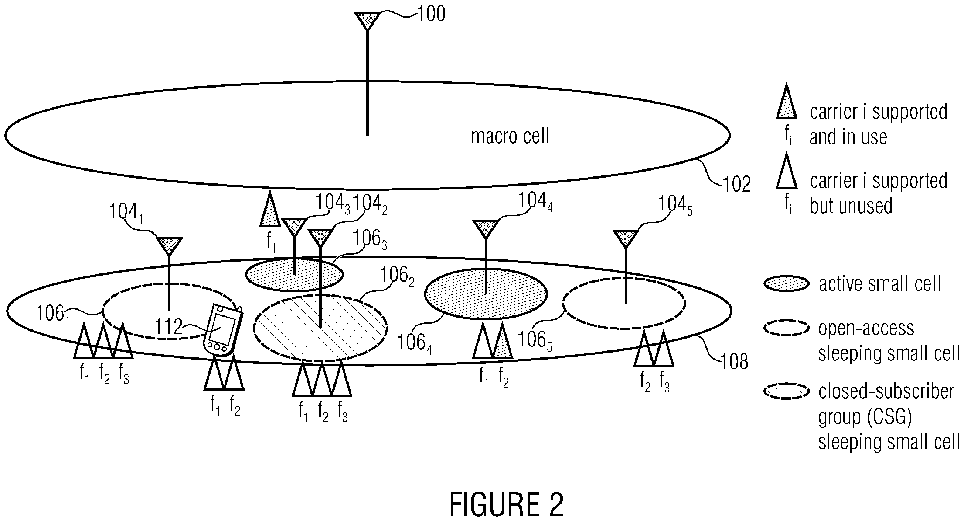

In wireless communication networks in general and also in the network shown in Fig. 1, energy savings and energy efficiency are of specific interest. For achieving such savings and efficiency, one or more of the SeNBs may be put to sleep or may be turned off when not in use. A UE cannot set up a communication with a sleeping SeNB, rather, it needs to connect for a communication directly with the MeNB 100. In the "ON" or "ACTIVE" state the SeNB is fully on and sends both user data to connected UEs and pilot symbols to enable new UEs to connect. The pilot symbols may be sent by the SeNBs to enable the UEs to differentiate the respective SeNBs. In the "OFF" or "SLEEP" state the SeNB is in a stand-by mode in which it can neither send nor receive any radio signals and consumes a non-negligible amount of power. Problems arising with small cells being in the sleep mode will now be discussed with reference to Fig. 2 which shows the wireless system of Fig. 1. It is assumed that the small cell base stations (SeNBs) 104₁, 104₂ and 104₅ are in the sleep mode, as is indicated by dashed circle indicating the respective small cells 106₁, 106₂ and 106₅. The SeNBs 104₃ and 104₄ are active. In dense small cell deployments, putting unused small cells, like cells 106₁, 106₂, and 106₅, to sleep provides benefits in terms of energy savings and reduced interference. In Fig. 2 there are shown different types of sleeping or inactive small cells, e.g., the open-access sleeping small cells 106₁ and 106₅ and the closed-subscriber group (CSG) sleeping small cell 106₂.

An open-access sleeping small cell may be accessed by any UEs in the vicinity of the small cell, while a closed-subscriber group (CSG) sleeping small cell may only be accessed by a UE that has subscribed to the group served by the small cell.

However, this also results in some problems. One problem is the small cell discovery. For UEs, like UE 112, it is a challenge to reliably discover sleeping small cells, because such cells either stop transmitting discovery signals or reduce the frequency of such a discovery signal transmission in order to save energy. In the absence of discovery signals, it becomes impossible for UEs to discover sleeping cells. For example, the UE 112 may not be aware that it is in the vicinity of the two sleeping small cells 106₁ and 106₂ if they are not transmitting discovery signals. Even though a reduced periodic transmission of discovery signals from a sleeping cell may improve discovery, the reliability of this process is low and requires a lot of energy on the part of both the small cell and the UE in order to improve discovery speed and reliability.

Another problem with sleeping cells is what resources to activate at a sleeping small cell. It is not immediately clear which resources and capabilities should be activated in a discovered small cell when several options are available. In Fig. 2, the UE 112 may somehow discover one or both nearby sleeping cells 106₁, 106₂, however in both cases it may be suboptimal for the small cell to activate all its resources. The default approach of activating all resources and capabilities is suboptimal, since it can lead, at best, to an underutilization of the activated resources. For example, in the situation depicted in Fig. 2, the UE 112 is capable of operating in the frequency bands f₁ and f₂, however it cannot operate in the frequency band f₃ that is also provided by the small cells 106₁ and 106₂.

Thus, activating in either of the small cells 106₁ and 106₂ the frequency band f₃ is not required for serving UE 112. Activating all resources may further result in a deterioration of the communication environment with regard to existing active communication links. When activating in either of small cells 106₁ and 106₂ all available frequency bands f₁ to f₃, an increased interference within an existing communication link may occur. In the situation depicted in Fig. 2, the already active small cell 106₃ operates in the frequency band f₁, so that activating all frequency bands in the sleeping cells 106₁ and 106₂, including frequency band f₁, may lead to an undesired interference situation deteriorating the communication environment.

Yet another problem with regard to sleeping small cells is the connection setup time, e.g., how to facilitate a quick and reliable connection setup. The process of activating a sleeping small cell, its discovery and the acquisition of the proper system information to connect to an activated small cell may result in a long connection setup delay experienced by the UE 112 when trying to connect to a small cell that has just been activated from its sleep mode so that no quick connection setup is possible.

Another problem with regard to sleeping small cells is the small cell energy consumption overhead, e.g., how to minimize small cell energy consumption. Activating more small cells than needed in order to select the best candidate may increase the energy consumption of the system unnecessarily.

Several approaches have been proposed in the prior art, for example in publications and standardization communities (see prior art reference [1]), to address the above referenced problems, however these problems mostly focus on addressing the problems of sleeping small cell discovery and may be grouped into four approaches.

The first approach may be referred to as an uplink-based signaling approach (see prior art reference [2]) in accordance with which a sleeping cell monitors uplink transmissions by leaving its radio frequency (RF) receiving chain in the on state. Upon detecting some UE activity, the sleeping cell wakes up from the sleep mode and activates its transmission chain to start transmitting discovery signals. UEs in the vicinity can discover the small cell and initiate connection procedures. This approach may have some advantages as it supports autonomous small cell on/sleep behavior, however this comes with a number of disadvantages. One disadvantage is that the small cell needs to maintain its RF receiving chain activated, which compromises any potential energy savings in the sleep mode.

Furthermore, this approach puts a lot of strain on the UE energy resources as the UEs need to transmit its signals frequently and on several frequency resources in order to guarantee that all small cells resources remain discoverable within a reasonable amount of time. Any attempt to optimize UE energy consumption for transmission of wake-up signal (e.g., by reducing the transmission intervals or the number of frequencies) directly affects the potential discovery latency. Above all, existing uplink-based signaling approaches do not provide any mechanisms to facilitate selective wake-up of cells based on UE and small cell capabilities as well as attributes. For instance, in Fig. 2, it may be desirable for the UE that has a superior service class to only wake up and connect to the closed subscriber cell 106₂ in order to obtain good throughput. However, with existing approaches, sleeping cells 106₁ and 106₂ will be activated, which leads to unnecessary energy consumption and potential sub-par connection to a small cell with less desirable properties.

Another approach known from the prior art is referred to as a downlink-based signaling approach in accordance with which small cells which are in the sleep mode, periodically or in response to a trigger signal, transmit discovery signals to enable UEs to discover and initiate connection procedures. Upon discovery, subsequent procedures are performed to fully activate the sleeping small cell. Like the above described uplink-based signaling approach, also the downlink-based signaling approach has the advantage of supporting an autonomous small cell on/sleep behavior. However, like the previous approach, at the same time it suffers from the same drawbacks. In addition in a dense small cell deployment, the transmission of unique discovery signals from all small cell base stations, including those being in the sleep mode, significantly increases the search space for the UE which can then lead to discovery delays.

Yet another known approach is referred to as a location-based scheme which relies on previously stored information to estimate whether a UE is in the vicinity of a small cell. One approach relies on storing RF maps that correspond to various small cell locations and using measured or reported radio fingerprints from UEs to determine when the UE is in the vicinity of a small cell, as is for example described in prior art reference [3]. Another approach relies on storing the actual locations of small cells and using geographic location reports from a UE to determine if there are any small cells in the vicinity of the UE, as is for example described in prior art references [4], [5]. Both approaches require an external entity, for example a macro base station, to wake up a sleeping small cell. They also require a backhaul connection between the external entity and small cells. In location-based schemes, the RF receiving and transmission chains of the sleeping small cells can be switched off completely, which maximizes the achievable energy savings. However, proper functioning of these schemes requires a training phase to obtain accurate reference data, which can cause disruptions to the service provided.

In addition to the above mentioned limitations, state of the art mechanisms for a small cell activation focus on making binary decisions on whether to wake up a sleeping cell or to leave it in the sleep mode. Very little attention is paid to the fact that a sleeping small cell and a UE may have many resources and capabilities which require more complex decisions to be made regarding the resource and the capabilities to activate in a sleeping small cell for a communication with a target UE.

European patent application 13194853.1 "Macro-cell assisted small cell discovery and resource activation" filed with the EPO on November 28, 2013 describes a mechanism to discover small cells in the vicinity of a UE and dynamically turn on small cell resources in a manner that takes into consideration the capabilities of the UE, the capabilities of the small cell and ongoing communications in the vicinity of the potential UE-small cell pair. With this proposal, the appropriate small cells are woken up to provide good service while still ensuring that ongoing communications are not detrimentally affected and unneeded small cells are not unnecessarily woken up. While this approach provides a good solution to the cell discovery and appropriate resource activation problems, it requires a backhaul link between the macro cell and small cells in order to support the required signaling procedures. Also more signaling is required.

Reference [5] describes a mechanism called Automatic Neighbor Relation (ANR), which is used by a network to request some fingerprint information from a UE after a specific timer expired.

EP 2 536 221 A1 concerns a mobile communication system and describes the communication among a serving cell, a local base station and a user equipment. The local base station is set into a sleeping mode in case there is no communication detected. As A macro cell or serving cell notifies the user equipment being served of the RACH configuration. The user equipment is notified of the RACH configuration of the local base station. The user equipment judges whether or not to perform an uplink transmission for a wake up. The information transmitted to the user equipment for the uplink transmission includes resources in which the uplink transmission is allowed, like a time resource and a frequency resource, and uplink frequency information.

US 2009/0285143 A1 describes an apparatus and a method for transiting an operation mode of a femto base station in a wireless communication system. The method includes, in a sleep mode, confirming whether operation transition request information is received from at least one terminal, and when receiving the operation transition request information from the terminal, entering an active mode.

WO 2012/093088 A1 describes a method for controlling the activity of a base station entity in a mobile communication network by means of a mobile device, wherein the base station entity is able to be operated in at least a first and a second operational mode. The first operational mode corresponds to the base station entity transmitting radio frequency signals such that a control channel is received in a radio coverage area of the base station entity by the mobile device, and the second operational mode corresponds to the base station entity not providing the control channel in the radio coverage area of the base station entity.

Starting from the prior art approach as described above, it is an object of the present invention to provide an improved approach for activating one or more appropriate small cells within an overlaid network comprising a macro network layer and a small cell layer.

This object is achieved by the method for waking up one or more sleeping small cell of claim 1, by a non-transitory computer program product of claim 10, by a user equipment of claim 11, and by a wireless communication system of claim 12.

The present invention provides a method according to claim 1 for waking up one or more sleeping small cell base stations in a wireless communication system for serving a user equipment, the wireless communication system comprising a plurality of small cell base stations and one or more macro base stations, the method comprising:
receiving a wake up signal configuration at a user equipment; and
transmitting, by the user equipment, a wake up signal configured in accordance with the received wake up signal configuration.

In accordance with embodiments the wake up signal configuration defines one or more of the following: when the wake up signal is transmitted by the user equipment, the type of wake up signal that is transmitted, how long the wake up signal is transmitted by the user equipment, and what resources to use for transmitting the wake up signal.

In accordance with embodiments the wake up signal configuration is provided by dedicated signaling to the user equipment.

In accordance with embodiments the wake up signal configuration defines to wake up small cell base stations that match the capabilities and/or access rights of the user equipment. For example, the wake up signal configuration defines to wake up all small cell base stations in the vicinity of the user equipment, or wake up small cell base stations in the vicinity of the user equipment supporting a defined transmission bandwidth, or wake up small cell base stations in the vicinity of the user equipment using a defined frequency band, or wake up closed subscriber group (CSG) small cell base stations in the vicinity of the user equipment, or wake up small cell base stations in the vicinity of the user equipment having specific advanced capabilities.

In accordance with examples the method comprises activating the one or more sleeping small cell base stations in response to a receipt of the wake up signal transmitted by the user equipment.

In accordance with examples the method comprises transmitting pilot signals by the one or more activated small cell base stations.

In accordance with examples the method comprises performing, at the user equipment, measurements of the detected pilot signals, and establishing a connection between the user equipment and at least one of the one or more small cell base stations.

In accordance with embodiments comprises starting a discovery timer in the user equipment, wherein the discovery timer is started upon reception of the wake up signal configuration, or upon transmission of the wake up signal by the user equipment, or after a configurable time interval after the reception of the wake up signal configuration or transmission of the wake up signal, and upon expiry of the discovery timer, transmitting, by the user equipment, a measurement report.

In accordance with embodiments an activated one of the one or more sleeping small cell base stations returns to sleep in case no connection is established with the user equipment.

In accordance with embodiments the method comprises activating a sleep timer in the one or more small cell base stations, upon reception of the wake up signal from the user equipment, or after a configurable time interval after the reception of the wake up signal, or upon activating the small cell base station, and setting an activated small cell base station to sleep after expiry of the sleep timer.

In accordance with embodiments the wake up signal configuration is provided to the user equipment by a macro base station or a small cell base station of the wireless communication system.

The present invention provides a non-transitory computer program product comprising a computer readable medium storing instructions which, when executed on a computer, carry out the inventive method.

The present invention provides a user equipment according to claim 11 for a wireless communication system comprising a plurality of small cell base stations and one or more macro base stations, wherein the user equipment is configured to receive a wake up signal configuration, and to transmit a wake up signal configured in accordance with the received wake up signal configuration.

The present invention provides a wireless communication system, comprising:
one or more macro base stations; and
a plurality of small cell base stations controlled by the one or more macro base stations for serving a user equipment,
wherein, for waking up one or more sleeping small cell base stations for serving the user equipment, the wireless communication system is configured to operate in accordance with embodiments of the inventive.
Exemplary embodiments of the present invention relate to overlaid network architectures comprising a macro cell and a dense deployment of small cells. Such architectures address high capacity demands in radio access networks. In a practical deployment of such a network architecture, energy saving functionality that enables unused small cells to be put to sleep is crucial from both an interference management and an energy savings point of view. However, putting small cells to sleep leads to the above described discovery problems for the user equipment (UE). This could lead, at best, to delayed discovery and connection to a suitable small cell or, at worst, to suboptimal connections to other cells. The inventive approach introduces a novel macro-assisted mechanism to allow small cells to be selectively woken up by UEs based on configurable criteria so that only a reduced number of small cells are woken up during the best cell selection procedure. Embodiments provide mechanisms to identify a suitable small cell to wake up based on UE and small cell capabilities and other attributes, to facilitate quick and reliable connection setup between the UE and the activated small cell, and to minimize energy consumption of unneeded small cells. Exemplary embodiments provide a mechanism to automatically switch off small cells after a timer expires. These mechanisms enable to considerably reduce the system energy consumption during the UE-small cell connection phase. Further embodiments provide a mechanism to limit the connection time between a UE and a small cell is.

The inventive approach improves the speed and reliability of suitable small cell discovery and connection setup and at the same time reduce the UE and small cell energy requirements for small cell discovery in sleep mode. The inventive mechanisms also enable the optimal use of UE and small cell resources. Exemplary embodiments of the present invention provide a network architectures having the following characteristics:
i. Two overlaid networks comprising macro cell base stations (BSs) in one layer and small cell BSs in the second layer. This hierarchy could also be nested.
ii. The small cell BSs have a sleep mode functionality. In the sleep mode, some hardware components of the base station are switched off in order to save energy. This action may be autonomous or may be controlled by an external entity through one or more several triggers. Putting a BS to sleep limits its ability to provide data connectivity to UEs. However, the small cell air interface supports discontinuous reception (DRX), even when the small cell is in sleep mode.
iii. All UEs support a communication with the macro cell BSs.
iv. Some or all UEs support a communication with the small cell BSs.
Exemplary embodiments of the present invention provide an improved approach for small cell discovery and activation in overlaid network architectures. The inventive approach goes beyond the prior art approaches described above in that the wake up signal is generated by the user equipment so that one or more small cell base stations in the vicinity of this user equipment can be activated for serving the user equipment. The wake up signal that is transmitted by the user equipment, in accordance with the inventive approach, is configured by a wake up signal configuration that is received at the user equipment, for example from a macro base station, a network controller, a small cell base station (for example in case of a handover) or from another network entity which may also include another user equipment functioning as a relay station in the network, e.g., when the user equipment moves from the coverage area of this relay station to the coverage area of another relay station or another small base station. On the basis of the wake up signal configuration received at the user equipment, the wake up signal is configured by the user equipment for transmission.

The inventive approach is advantageous as it provides for the possibility to more precisely select from the plurality of small cell base stations the ones which are to be activated and how they should be activated, for example in terms of what resources should be activated and what resources in case some of the resources cannot be used by the user equipment and, therefore, may remain deactivated.

When compared to the above described conventional uplink-based and downlink-based signaling approaches, the inventive approach is advantageous as it allows for a selective wake up of cells based on the UE and small cell capabilities as well as on the basis of specific attributes while avoiding discovery delays.

When compared to the location-based schemes mentioned above, in accordance with the inventive approach there is an advantage in that it is not necessary to have an external entity, for example the macro base station, to wake up sleeping small cells, rather the sleeping small cells are activated by those entities which actually make a connection to the small cell. No training phase for obtaining accurate reference data is required, and the inventive approach also takes into consideration the specifics and capabilities of the UE and the small cell. There is also no need to have a backhaul connection between the external entity and the small cells to perform the small cell wake up.

When compared to the macro-cell assisted small cell discovery and resource activation approach described above, the inventive approach is advantageous as it realizes a similar effect as in this approach, however, no backhaul link is required. If present, the backhaul link may be employed in the present invention, which will further improve the discovery process and the resource activation decisions.

When compared to the automatic neighbor relation (ANR) approach described in 3GPP TS 36.331, the inventive approach is advantageous as in accordance with embodiments the timer used has a different purpose, namely to cope with the wake up signal detection and activation delay of the small cell until the pilot symbols can be measured.

In general, the inventive approach is advantageous as it provides for an optimal use of the UE and candidate small cell capabilities because
- the small cells go to sleep autonomously and are woken up by a UE only when needed,
- only sleeping small cells with specific capabilities may be configured to be activated, and
- of the efficiency in the small cell discovery by means of the configuration of the wake up signal which is transmitted by the UE.

A further advantage is that the inventive approach provides for a highly configurable small cell connection procedure that is offered by the wake up signal customization features. In accordance with embodiments, a further advantage is that a reliable and fast small cell connection set up is provided due to the provision of a UE timer which forces (reliable) measurement feedback after a configurable time period.

In the following, embodiments of the present invention will be described in further detail with reference to the accompanying drawings, in which:
- Fig. 1: shows the general structure of a wireless communication system having two distinct overlaid networks;
- Fig. 2: shows the wireless system of Fig. 1 for illustrating potential problems arising with small cells being in the sleep mode;
- Fig. 3: shows an example signaling flow diagram depicting the application of the inventive approach;
- Fig. 4: shows a wireless communication system including a plurality of macro cells;
- Fig. 5: shows a network as in Fig. 1, wherein the macro base station includes a controller and a database; and
- Fig. 6: shows an apparatus in a network of Fig. 1 including a database and a controller coupled via an interface with a macro base station.

In the following, embodiments of the present invention will be described in further detail.

In accordance with an embodiment, a small cell discovery approach is taught which addresses the problem of how a UE can discover a suitable small cell in a timely and energy efficient manner if the small cell is in the sleep mode. A small cell is put into the sleep mode when it is not used, for example when there is no user equipment to be served by the small cell. The sleep mode may be considered a stand-by mode in which the small cell will not send or receive any radio signals for a radio transmission and consumes a reduced amount of power. In the sleep mode some of the hardware components in the small cell base station are either completely switched off or operated in a low-power mode, wherein the exact components to be switched off are a function of the specific hardware architecture and the particular energy saving algorithm. In the sleep mode, in accordance with embodiments of the present invention, the small cell, however, retains the capability to receive a signal transmission from the UE indicating that the small cell should be activated so that in receipt of the this signal the small cell transitions to the active state. The signal sent out by the user equipment may be any kind of signal that can be received and processed by the sleeping small cell for starting the activation process in the small cell. Such a signal which causes a small cell base station to resume operation/leave the inactive or sleeping state may be referred to as "activation signal" or a "wake up signal". In the following, the signal shall be referred to as "wake up signal". The wake up signal may have various formats, for example, it may be a preamble (bit pattern) sequence in the physical layer (similar to RACH - random-access channel). In another embodiment, it may be the MAC (media access control) controlled PDU (protocol description unit). Alternatively, it may be an RRC (radio resource control) message that may include, for example, the user equipment identity and the like.

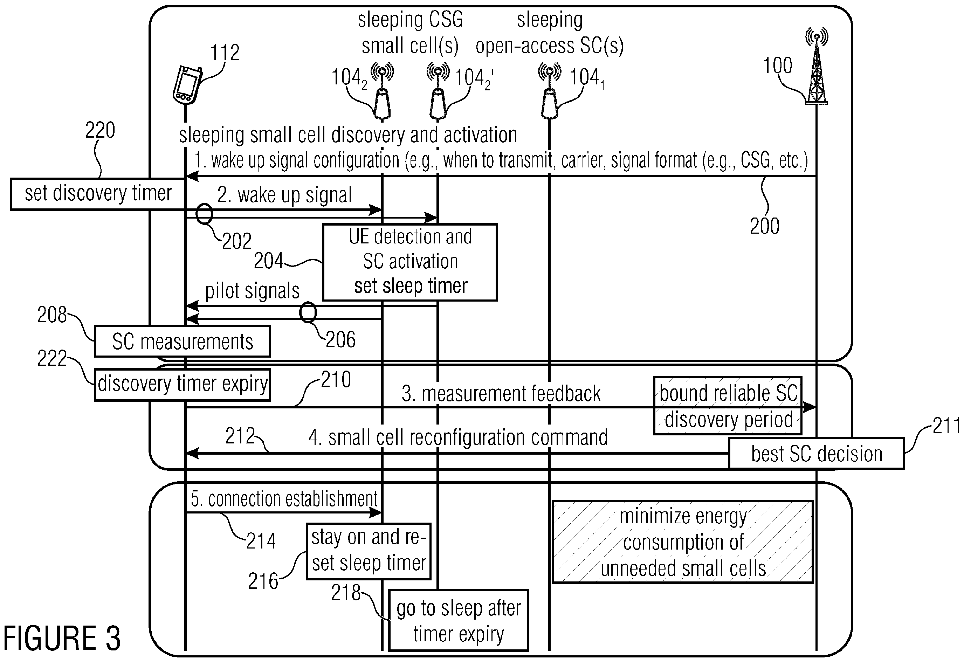

Fig. 3 illustrates a signaling flow for the inventive small cell discovery and resource activation procedure in accordance with an embodiment. Fig. 3 shows the macro cell base station 100 as well as the user equipment 112 and a sleeping open access small cell, for example small cell 104₁ as well as two sleeping CSG small cells, for example small cell 104₂ shown in Fig. 2 and an additional one 104₂' which has not been shown in Fig. 2. Fig. 3 shows the signaling among the just mentioned network entities in accordance with embodiments of the present invention.

Fig. 3 describes embodiments for a small cell discovery and which resources to activate, e.g., how a user equipment discovers a suitable small cell in a timely and energy efficient manner if the small cell is in the sleep mode and how the capability/attributes of the UE and the small cell are taken into account to activate the right small cell and resources. In accordance with embodiments, a macro-assisted wake up (WU) signal configuration is proposed in accordance with which the macro cell base station 100 indicates when a UE can transmit the WU signal. As is shown at 200, the macro base station 100 provides a configuration of the WU signal, for example it indicates which frequency resources to use, for example frequencies f₁, f₂, f₃ or all frequencies. Also, it indicates, in accordance with embodiments, the nature of the signal, for example to wake up all small cells, to wake up only small cells with a bandwidth of x MHz, to wake up only CSG cells 104₂ or the like. Also additional information may be contained, for example the sending duration of the wake up signal, the uplink resource allocation and the like. Once the user equipment 112 receives the wake up signal configuration it configures or generates the wake up signal to be transmitted on the basis of the received wake up signal configuration and, as is shown at 202, sends out the wake up signal.

In the embodiment of Fig. 3 it is assumed that the wake up signal configuration received from the macro base station indicated that only sleeping CSG small cells should be activated, so that, as can be seen from Fig. 3, the wake up signal, at 202, is only considered by the sleeping small cells 104₂ and 104₂'. Thus, in accordance with the embodiment described with regard to Fig. 3, a configurable wake up signal is sent from the macro cell 100 to the UE 112 to facilitate the activation of only specific types of small cells 104₂, 104₂'. This may for example be to only activate closed subscriber group small cells, as shown in Fig. 3, however, also other small cells may be activated, for example only those small cells that support particular advanced features or the like. The main role of the wake up signal configuration received at the user equipment 112, for example from the macro base station 100, is to configure the subsequent wake up signal which will be sent by the UE 112 so that certain small cells can be woken up.

In accordance with the present invention, this wake up signal is highly configurable to allow a high degree of customization on the basis of the information received at the user equipment, for example from the base station 100. With regard to the inventive approach, it is noted that the wake up signal, in accordance with embodiments, may be received from the macro base station 100, however the inventive approach is not limited to this embodiment. Rather, the wake up signal configuration or a signal carrying the wake up signal configuration may be provided also by other network entities, for example by a network controller, by small cells, for example in the case of a handover among small cells, or by another user equipment operating as a relay for the user equipment 112. Providing the wake up signal configuration to the user equipment 112 from an "external" source is advantageous as the external source has more information about the environment in which the user equipment 112 apparently is located, for example in terms of what small cells are available, what resources are used and the like, so that, taking this "overview" over the overall situation of the network allows for customizing the wake up signal that is finally transmitted by the user equipment 112 in a way to provide for an efficient wake up of a most suitable small cell for serving the user equipment 112.

In accordance with embodiments, the wake up signal configuration may indicate to the user equipment when the user equipment should send the wake up signal, for example directly upon receipt of the wake up signal configuration, after a certain fixed time or at the beginning or the end of a radio frame/subframe. Configuration alternatives of the wake up signal may also be indicated, for example to wake up all small cells, to wake up only those small cells supporting a transmission bandwidth of x MHz, to wake up small cells using a certain frequency band, to wake up closed subscriber group (CSG) small cells or to wake up small cells with specific advanced capabilities. Further, the wake up signal configuration may indicate how long the wake up signal should be sent and which uplink resources should be used to send the wake up signal. The wake-up signal configuration may also indicate prioritization of wake-up signal transmission with ongoing data transmissions.

As is shown at block 204 in Fig. 3, once the targeted small cells 104₂ and 104₂' receive the wake up signal, the user equipment is detected by these small cells and a small cell activation process will be started so that the components of the respective small cells, for example the hardware and software components, are transitioned from the inactive or low energy consumption state to an active which allows serving a user equipment for a data transmission in the network. As is shown at 206, the activated sleeping small cells start transmitting pilot signals which are received at the user equipment 112 which carries out small cell measurements, as is indicated at block 208. The measurement results are transmitted from the user equipment 112 to the macro base station 100, as is shown at 210 and the macro base station, at block 211, selects the small cell that serves the user equipment 112 best and returns to the user equipment 112 a small cell reconfiguration command, as is shown at 212. In a particular embodiment where a backhaul link exists between the macro cell and the small cell, appropriate resources could already be configured at the small cell and all relevant parameters to quickly establish a connection could be sent to the UE as part of the small cell reconfiguration command. The UE context could also be transferred from the macro to the small cell over the backhaul link to facilitate quick connection setup. Once the user equipment received the small cell reconfiguration command indicating which of the small cells 104₂ and 104₂' should be used it sends out a respective connection establishment request to the desired small cell base station, as is shown at 214. In the example of Fig. 3, it is assumed that small cell base station 104₂ is to be activated for a connection to the user equipment 112 so that this base station stays on and starts a communication with the user equipment 112, as is indicated at 216. The other base station 104₂' which has been selected at 202 due to the receipt of the wake up signal returns to sleep, as is indicated at block 218.

Fig. 3 shows the complete process for activating a small cell base station and for activating it for a connection to the user equipment, however, the important aspect of the inventive approach, in accordance with the preferred embodiments, is the way how the wake up signal is generated at the user equipment 112, namely in receipt of the wake up signal configuration received, for example, from the macro base station 100. Once the wake up signal has been transmitted, also other steps may be taken at the respective sleeping small cells for setting up a configuration. For example, following the receipt of the pilot signals and the measurements at block 208, the user equipment 112 may decide to which of the small cells a connection should be established, i.e. there are embodiments in accordance with which there is no measurement feedback from the user equipment 112 to the macro base station 100 and the receipt of a small cell reconfiguration command from the macro base station at the user equipment 112 prior to the establishing of the connection.

In accordance with embodiments of the inventive approach, the problem of facilitating a quick and reliable connection setup is also addressed, namely how to ensure that the small cell discovery time is bounded. In accordance with embodiments, to achieve this a timer is used in the user equipment for the small cell discovery and for reliable measurements, wherein this timer, for example via the wake up signal configuration received from the macro base station 100, may be configurable so that the time for the small cell discovery and for the measurement period is bound. This is also described with regard to Fig. 3, which shows at 220 that at the time the wake up signal configuration is received at the user equipment 112 the discovery timer is set. At block 222 it is determined that the discovery timer has expired and the measurements carried out so far are now used for deciding on the connection to be established, for example in a way as described with regard to Fig. 3 by sending the measurement to the macro base station 100, receiving the small cell reconfiguration command and establishing the respective connection to the desired small cell. The timer provided in the user equipment for the small cell discovery and for the reliable measurements is advantageous as there is a tradeoff between reliable small cell discovery and connection delay. Reliable measurements may be obtained over a long period of time, however, this comes at the expense of connection delays. The timer described above is provided in order to balance the time needed for connection and to ensure some degree of reliability in the measurement and corresponding cell selection. Therefore, the configurable discovery timer at the user equipment is used. The purpose of this timer is to trade off reliable discovery and connection setup time in a way that ensures that the connection setup time is bounded. The timer in the user equipment can be configured so that it is guaranteed that the user equipment provides enough measurement feedback, for example to the macro base station, after a certain time. The duration of the timer is not fixed but can be adjusted, for example a longer timer will allow potentially more reliable measurements while increasing the delay in the connection procedure. The timer may be started upon reception of the wake up configuration signal 200, or upon transmission of the wake up signal 202 or upon a configurable time interval after the reception or after the transmission of the wake up signal.

In accordance with yet other embodiments, the problem of minimizing small cell energy consumption is addressed, namely how to ensure that only necessary small cells are activated and unneeded ones consume the minimum amount of energy. In accordance with embodiments, this is addressed by providing a timer at the small cell for an auto sleep mode after receipt of the wake up signal. As is shown at block 204 in Fig. 3, a "sleep timer" is provided at the respective small cells which is started when the wake up signal from the user equipment 112 has been received. The small cell will return to sleep after the sleep timer expired if no user equipment established a connection or if no additional wake up signal is received. The timer may be configured by a macro base station 100 or may be specified in the small cell. As is shown at block 216, since a connection is established between the user equipment 112 and the small cell 104₂, the small cell remains on, e.g. by resetting the sleep timer. On the other hand, the small cell 104₂', which has also been activated in response to the wake up signal 202, goes back to sleep after the sleep timer expired, as is shown at block 218, because no connection was established and/or no additional wake up signal was received at the small cell 104₂'. In accordance with embodiments, using a timer at a small cell for automatic sleep mode is advantageous in situations where multiple small cells are present in the vicinity of the UE that meet the wake up signal criteria. In other words, the wake up signal configuration received at the user equipment 112 causes the user equipment 112 to generate a wake up signal 202 that will wake up multiple small cells in the vicinity of the UE meeting the wake up signal criteria. To ensure that unneeded small cells quickly go back to sleep to save energy, the above described small cell timer is used. This timer may be configurable or specified for different types of wake up signals. The small cells start the timer upon reception of the wake up signal, upon activation or upon a configurable time interval after reception of the wake up signal or after activation. In the absence of a UE connection upon time expiry, the small cell goes back to sleep. Several events may trigger the reset of the timer, for example the timer may be reset any time a wake up signal is detected which ensures that the small cell remains activated when there is a potential user equipment that needs a small cell connection. The user equipment may be configured by means of the received wake up signal configuration to send a keep-on indefinitely signal during connection establishment with a small cell to override the sleep timer.

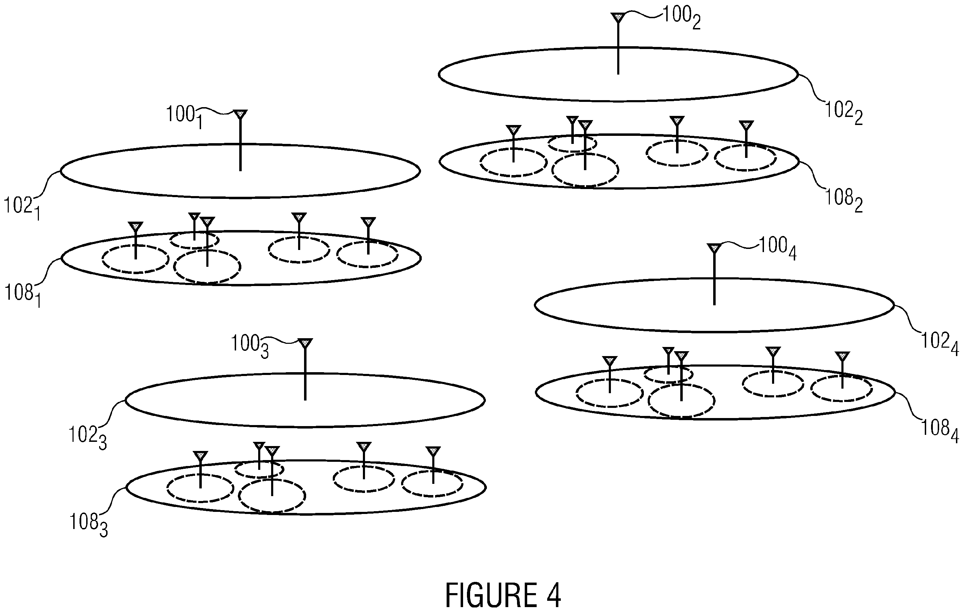

In accordance with embodiments, a wireless communication system is provided including a plurality of macro base station 100₁-100₄ each including a plurality of small cells, i.e. the wireless communication system includes one or more small cell systems as depicted in Fig. 1, as is schematically represented by Fig. 4.

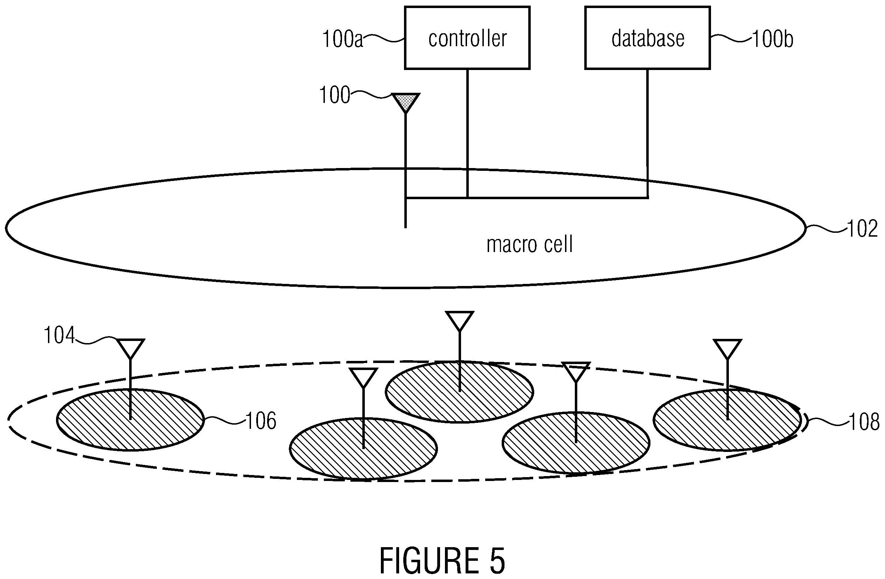

In accordance with embodiments, the inventive approach may be implemented, at least in part, in the MeNB 100 including a controller 100a controlling one or more SeNBs and UEs in a way as described above. Fig. 5 shows a network as in Fig. 1 in which the MeNB 100 includes the controller 100a. Further, in accordance with embodiments, the MeNB 100 may also include a database 100b as depicted in Fig. 5 for storing information for use by the controller 100a, e.g., fingerprints received from the SeNBs, measurements received from the SeNBs and/or the UEs, the UE and SeNB capabilities and the like.

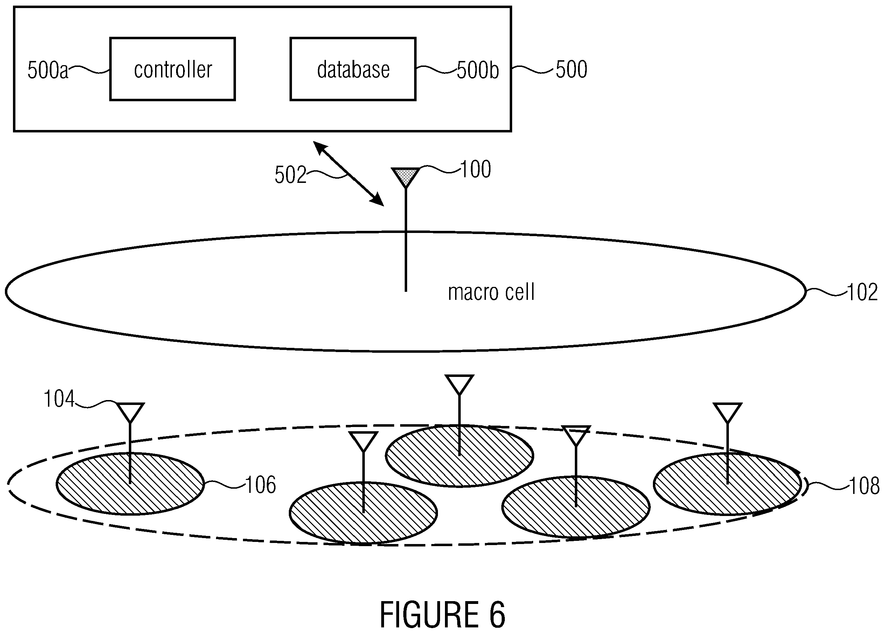

In accordance with further embodiments, an apparatus may be provided. Fig. 6 shows the network of Fig. 1 including an apparatus 500 including a database 500a and a controller 500b for controlling one or more SeNBs and UEs in a way as described above. The controller 500b is coupled with the MeNB 100 via an interface that is schematically represented by the connection 502. The apparatus 500 may store in its database 500a information for use by the controller 100a, e.g., fingerprints received from the SeNBs, measurements received from the SeNBs and/or the UEs, the UE and SeNB capabilities and the like. The controller may be a network controller of the communication system serving one or more of the MeNBs of the system.

Further, in accordance with embodiments, the SeNBs 104, for example by means of their backhaul connection, are provided with an interface for receiving the signal controlling the SeNB.

In Figs. 4 and 5 overlaid networks are shown implemented in a way as depicted in Figs. 1 and 2. It is noted that the overlaid networks are not limited to this implementation. The overlaid networks may include a backhaul connection between the small cells and the macro cell base station. In such an overlaid network structure the SeNBs of the small cells may be controlled by the MeNB and may be connected to the umbrella network (the MeNB 100) via the respective backhaul links. Thus, in accordance with embodiments, in a wireless communication system including, e.g., an heterogeneous network as radio access network, control signals and user data signals may be separated into two distinct overlaid networks, a network of macro cells wherein each macro cell includes a macro base station (e.g. referred to as MeNB), and a network of small cell base stations (also referred to as SeNB) controlled by one macro base station. Such overlaid networks are also called control/user-plane separated networks or C/U-plane separated networks (including a control plane base station controlling a plurality of user plane base stations).

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

### Prior Art References

[1] TR 36.839 E-UTRA Mobility Enhancements in Heterogeneous Networks. 3GPP.
[2] 3rd Generation Partnership Project (3GPP), Technical Specification Group Radio Access Network, Views on Small Cell On/Off Mechanisms, 3GPP TSG RAN WG1 R1-133456, 3GPP Std. R1-133 456, Aug. 2013.
[3] Prasad, A., Tirkkonen, O., Lunden, P., Yilmaz, O., Dalsgaard, L., & Wijting, C. (May 2013). Energy-Efficient Inter-Frequency Small Cell Discovery Techniques for LTE-Advanced Heterogeneous Network Deployments. IEEE Communications Magazine, 72-81.
[4] E. Ternon, P. Agyapong, L. Hu, and A. Dekorsy, "Database-aided Energy Savings in Next Generation Dual Connectivity Heterogeneous Networks," in IEEE WCNC'14 Track 3 (Mobile and Wireless Networks) (IEEE WCNC'14 Track 3 : NET), Apr. 2014.
[5] TR 36.331 E-UTRA Radio Resource Control (RRC) Protocol specification. 3GPP

## Claims

1. A method for waking up one or more sleeping small cell base stations (104₁-104₅) in a wireless communication system for serving a user equipment (112), the wireless communication system comprising a plurality of small cell base stations (104₁-104₅) and one or more macro base stations (100), the method comprising:
receiving (200) a wake up signal configuration at a user equipment (112); and
transmitting (202), by the user equipment (112), a wake up signal configured in accordance with the received wake up signal configuration to facilitate the activation of a plurality of specific types of small cell base stations (104₁-104₅);
activating (204) one or more sleeping small cell base stations (104₁-104₅) in response to a receipt of the wake up signal transmitted by the user equipment (112);
transmitting (206) pilot signals by the activated small cell base stations (104₁-104₅);
performing (208), at the user equipment (112), measurements of the detected pilot signals;
transmitting (210) the measurement results from the user equipment (112) to the macro base station (100);
at the macro base station (100), selecting (211) the small cell base station (104₁-104₅) to serve the user equipment (112) and returning (212) to the user equipment (112) a small cell reconfiguration command; and
responsive to the received small cell reconfiguration command indicating which of the small cell base stations (104₁-104₅) should be used, establishing (214) a connection between the user equipment (112) and the indicated small cell base stations (104₁-104₅).

2. The method of claim 1, wherein the wake up signal configuration defines one or more of the following:
when the wake up signal is transmitted by the user equipment (112),
the type of wake up signal that is transmitted,
how long the wake up signal is transmitted by the user equipment (112),
what resources to use for transmitting the wake up signal.

3. The method of claim 2, wherein the wake up signal configuration is provided by dedicated signaling to the user equipment (112).

4. The method of claim 2 or 3, wherein the wake up signal configuration defines to wake up small cell base stations (104₁-104₅) that match the capabilities and/or access rights of the user equipment (112).

5. The method of one of claims 1 to 4, comprising:
starting (216) a discovery timer in the user equipment (112), wherein the discovery timer is started upon reception of the wake up signal configuration, or upon transmission of the wake up signal by the user equipment (112), or after a configurable time interval after the reception of the wake up signal configuration or transmission of the wake up signal, and
upon expiry (218) of the discovery timer, transmitting, by the user equipment (112), a measurement report.

6. The method of one of claims 1 to 5, wherein an activated one of the one or more sleeping small cell base stations (104₁-104₅) returns (218) to sleep in case no connection is established with the user equipment (112).

7. The method of claim 6, comprising:
activating (204) a sleep timer in the one or more small cell base stations (104₁-104₅), upon reception of the wake up signal from the user equipment (112), or after a configurable time interval after the reception of the wake up signal, or upon activating the small cell base station (104₁-104₅), and
setting (218) an activated small cell base station (104₁-104₅) to sleep after expiry of the sleep timer.

8. The method of one of claims 1 to 7, wherein the wake up signal configuration is provided to the user equipment (112) by a macro base station (100) or a small cell base station (104₁-104₅) of the wireless communication system.

9. The method of one of claims 1 to 8, wherein the wake up signal is one of
a preamble sequence in a physical layer, or
a MAC controlled protocol description unit, or
a radio resource control message.

10. A non-transitory computer program product comprising a computer readable medium storing instructions which, when executed on a computer, carry out the method of one of claims 1 to 9.

11. A user equipment (112) for a wireless communication system comprising a plurality of small cell base stations (104₁-104₅) and one or more macro base stations (100, 100₁-100₄), wherein the user equipment (112) is configured to receive a wake up signal configuration,
transmit a wake up signal configured in accordance with the received wake up signal configuration to facilitate the activation of a plurality of specific types of small cell base stations (104₁-104₅), detect pilot signals transmitted by one or more small cell base stations being activated in response to the wake up signal transmitted by the user equipment perform (208) measurements of the detected pilot signals, transmit (210) the measurement results to the macro base station (100), receive from the macro base station a small cell reconfiguration command indicating a selected small cell base station and establish (214), responsive to the received small cell reconfiguration command indicating which of the small cell base stations (104₁-104₅) should be used, a connection with the indicated small cell base stations (104₁-104₅).

12. A wireless communication system, comprising:
one or more macro base stations (100, 100₁-100₄); and
a plurality of small cell base stations (104₁-104₅) controlled by the one or more macro base stations (100, 100₁-100₄) for serving a user equipment (112), wherein, for waking up one or more sleeping small cell base stations (104₁-104₅) for serving the user equipment (112), the wireless communication system is configured to operate in accordance with the method of one of claims 1 to 9.

## Patentansprüche

1. Ein Verfahren zum Aufwecken einer oder mehrerer schlafender Kleinzellenbasisstationen (104₁-104₅) in einem drahtlosen Kommunikationssystem, um eine Benutzereinrichtung (112) zu versorgen, wobei das drahtlose Kommunikationssystem eine Mehrzahl von Kleinzellenbasisstationen (104₁-104₅) und eine oder mehrere Makrobasisstationen (100) aufweist, wobei das Verfahren folgende Schritte aufweist:
Empfangen (200) einer Aufwecksignalkonfiguration an einer Benutzereinrichtung (112) und
Senden (202) eines Aufwecksignals, das gemäß der empfangenen Aufwecksignalkonfiguration konfiguriert ist, die Aktivierung einer Mehrzahl spezifischer Typen von Kleinzellenbasisstationen (104₁-104₅) zu ermöglichen, durch die Benutzereinrichtung (112);
Aktivieren (204) einer oder mehrerer schlafender Kleinzellenbasisstationen (104₁-104₅) ansprechend auf ein Empfangen des Aufwecksignals, das durch die Benutzereinrichtung (112) gesendet wird;
Senden (206) von Pilotsignalen durch die aktivierten Kleinzellenbasisstationen (104₁-104₅);
Durchführen (208) von Messungen der erfassten Pilotsignale an der Benutzereinrichtung (112);
Senden (210) der Messergebnisse von der Benutzereinrichtung (112) an die Makrobasisstation (100);
Auswählen (211), an der Makrobasisstation (100), der Kleinzellenbasisstation (104₁-104₅), um die Benutzereinrichtung (112) zu versorgen, und Zurückgeben (212) eines Kleinzellenrekonfigurationsbefehls an die Benutzereinrichtung (112) und
Einrichten (214), ansprechend auf den empfangenen Kleinzellenrekonfigurationsbefehl, der angibt, welche der Kleinzellenbasisstationen (104₁-104₅) verwendet werden soll, einer Verbindung zwischen der Benutzereinrichtung (112) und den angegebenen Kleinzellenbasisstationen (104₁-104₅).

2. Das Verfahren gemäß Anspruch 1, bei dem die Aufwecksignalkonfiguration eines oder mehrere der Folgenden definiert:
wann das Aufwecksignal durch die Benutzereinrichtung (112) gesendet wird,
den Typ des gesendeten Aufwecksignals,
wie lang das Aufwecksignal durch die Benutzereinrichtung (112) gesendet wird,
welche Ressourcen zum Senden des Aufwecksignals zu verwenden sind.

3. Das Verfahren gemäß Anspruch 2, bei dem die Aufwecksignalkonfiguration der Benutzereinrichtung (112) durch dedizierte Signalisierung bereitgestellt wird.

4. Das Verfahren gemäß Anspruch 2 oder 3, bei dem die Aufwecksignalkonfiguration bestimmt, Kleinzellenbasisstationen (104₁-104₅) aufzuwecken, die mit den Fähigkeiten und/oder Zugriffsrechten der Benutzereinrichtung (112) übereinstimmen.

5. Das Verfahren gemäß einem der Ansprüche 1 bis 4, das folgende Schritte aufweist:
Starten (216) eines Entdeckungszeitgebers in der Benutzereinrichtung (112), wobei der Entdeckungszeitgeber auf ein Empfangen der Aufwecksignalkonfiguration hin oder auf ein Senden des Aufwecksignals durch die Benutzereinrichtung (112) hin oder nach einem konfigurierbaren Zeitintervall nach dem Empfangen der Aufwecksignalkonfiguration oder dem Senden des Aufwecksignals gestartet wird, und Senden, auf ein Ablaufen (218) des Entdeckungszeitgebers hin, eines Messberichts durch die Benutzereinrichtung (112).

6. Das Verfahren gemäß einem der Ansprüche 1 bis 5, bei dem eine aktivierte der einen oder der mehreren schlafenden Kleinzellenbasisstationen (104₁-104₅) zum Schlafen zurückkehrt (218), falls keine Verbindung mit der Benutzereinrichtung (112) eingerichtet wird.

7. Das Verfahren gemäß Anspruch 6, das folgende Schritte aufweist:
Aktivieren (204) eines Schlafzeitgebers in der einen oder den mehreren Kleinzellenbasisstationen (104₁-104₅) auf ein Empfangen des Aufwecksignals von der Benutzereinrichtung (112) hin oder nach einem konfigurierbaren Zeitintervall nach dem Empfangen des Aufwecksignals oder auf ein Aktivieren der Kleinzellenbasisstation (104₁-104₅) hin und
Festlegen (218), dass eine aktivierte Kleinzellenbasisstation (104₁-104₅) nach Ablaufen des Schlafzeitgebers schläft.

8. Das Verfahren gemäß einem der Ansprüche 1 bis 7, bei dem die Aufwecksignalkonfiguration der Benutzereinrichtung (112) durch eine Makrobasisstation (100) oder eine Kleinzellenbasisstation (104₁-104₅) des drahtlosen Kommunikationssystems bereitgestellt wird.

9. Das Verfahren gemäß einem der Ansprüche 1 bis 8, bei dem das Aufwecksignal eines der Folgenden ist:
einer Präambelsequenz in einer physikalischen Schicht oder
einer MAC-gesteuerten Protokollbeschreibungseinheit oder
einer Funkressourcensteuerungsnachricht.

10. Ein nicht flüchtiges Computerprogrammprodukt, das ein computerlesbares Medium aufweist, das Befehle speichert, die bei Ausführung auf einem Computer das Verfahren gemäß einem der Ansprüche 1 bis 9 ausführen.

11. Eine Benutzereinrichtung (112) für ein drahtloses Kommunikationssystem, die eine Mehrzahl von Kleinzellenbasisstationen (104₁-104₅) und eine oder mehrere Makrobasisstationen (100, 100₁-100₄) aufweist, wobei die Benutzereinrichtung (112) zu Folgendem konfiguriert ist:
Empfangen einer Aufwecksignalkonfiguration,
Senden eines Aufwecksignals, das gemäß der empfangenen Aufwecksignalkonfiguration konfiguriert ist, die Aktivierung einer Mehrzahl spezifischer Typen von Kleinzellenbasisstationen (104₁-104₅) zu ermöglichen,
Erfassen von Pilotsignalen, die durch eine oder mehrere Kleinzellenbasisstationen gesendet werden, die ansprechend auf das durch die Benutzereinrichtung gesendete Aufwecksignal aktiviert werden,
Durchführen (208) von Messungen der erfassten Pilotsignale,
Senden (210) der Messergebnisse an die Makrobasisstation (100), Empfangen eines Kleinzellenrekonfigurationsbefehls, der eine ausgewählte Kleinzellenbasisstation angibt, von der Makrobasisstation und
Einrichten (214), ansprechend auf den empfangenen Kleinzellenrekonfigurationsbefehl, der angibt, welche der Kleinzellenbasisstationen (104₁-104₅) verwendet werden soll, einer Verbindung mit den angegebenen Kleinzellenbasisstationen (104₁-104₅).

12. Ein drahtloses Kommunikationssystem, das folgende Merkmale aufweist:
eine oder mehrere Makrobasisstationen (100, 100₁-100₄) und
eine Mehrzahl von Kleinzellenbasisstationen (104₁-104₅), die durch die eine oder die mehreren Makrobasisstationen (100, 100₁-100₄) gesteuert werden, um eine Benutzereinrichtung (112) zu versorgen,
wobei zum Aufwecken einer oder mehrerer schlafender Kleinzellenbasisstationen (104₁-104₅), um die Benutzereinrichtung (112) zu versorgen, das drahtlose Kommunikationssystem konfiguriert ist, in Übereinstimmung mit dem Verfahren gemäß einem der Ansprüche 1 bis 9 zu arbeiten.

## Revendications

1. Procédé pour éveiller une ou plusieurs petites stations de base cellulaires à l'état de repos (104₁ à 104₅) dans un système de communication sans fil pour servir un équipement d'utilisateur (112), le système de communication sans fil comprenant une pluralité de petites stations de base cellulaires (104₁ à 104₅) et une ou plusieurs macro-stations de base (100), le procédé comprenant le fait de:
recevoir (200) une configuration de signal de réveil à un équipement d'utilisateur (112); et
transmettre (202), par l'équipement d'utilisateur (112), un signal de réveil configuré selon la configuration de signal de réveil reçue pour faciliter l'activation d'une pluralité de types spécifiques de petites stations de base cellulaires (104₁ à 104₅);
activer (204) une ou plusieurs petites stations de base cellulaires à l'état de repos (104₁ à 104₅) en réponse à une réception du signal de réveil transmis par l'équipement d'utilisateur (112);
transmettre (206) des signaux pilotes par les petites stations de base cellulaires activées (104₁ à 104₅);
effectuer (208), à l'équipement d'utilisateur (112), des mesures des signaux pilotes détectés;
transmettre (210) les résultats de mesure de l'équipement d'utilisateur (112) à la macro-station de base (100);
à la macro-station de base (100), sélectionneur (211) la petite station de base cellulaire (104₁ à 104₅) pour servir l'équipement d'utilisateur (112) et retourner (212) à l'équipement d'utilisateur (112) une commande de reconfiguration de petite cellule; et
en réponse à la commande de reconfiguration de petite cellule reçue indiquant celle des petites stations de base cellulaires (104₁ à 104₅) qui doit être utilisée, établir (214) une connexion entre l'équipement d'utilisateur (112) et les petites stations de base cellulaires indiquées (104₁ à 104₅).

2. Procédé selon la revendication 1, dans lequel la configuration du signal de réveil définit un ou plusieurs parmi ce qui suit:
lorsque le signal de réveil est transmis par l'équipement d'utilisateur (112),
le type de signal de réveil qui est transmis,
le temps pendant lequel le signal de réveil est transmis par l'équipement d'utilisateur (112),
les ressources à utiliser pour transmettre le signal de réveil.

3. Procédé selon la revendication 2, dans lequel la configuration de signal de réveil est fournie par une signalisation dédiée à l'équipement d'utilisateur (112).

4. Procédé selon la revendication 2 ou 3, dans lequel la configuration de signal de réveil définit de réveiller les petites stations de base cellulaires (104₁ à 104₅) qui correspondent aux capacités et/ou aux droits d'accès de l'équipement d'utilisateur (112).

5. Procédé selon l'une des revendications 1 à 4, comprenant le fait de:
mettre en marche (216) une minuterie de découverte dans l'équipement d'utilisateur (112), où la minuterie de découverte est mise en marche à la réception de la configuration de signal de réveil ou à la transmission du signal de réveil par l'équipement d'utilisateur (112) ou après un laps de temps configurable après la réception de la configuration de signal de réveil ou la transmission du signal de réveil, et
à l'expiration (218) de la minuterie de découverte, transmettre, par l'équipement d'utilisateur (112), un rapport de mesure.

6. Procédé selon l'une des revendications 1 à 5, dans lequel l'une activée des une ou plusieurs petites stations de base cellulaires à l'état de repos (104₁ à 104₅) retourne (218) à l'état de repos au cas où il n'est pas établi de connexion avec l'équipement d'utilisateur (112).

7. Procédé selon la revendication 6, comprenant le fait de:
activer (204) une minuterie d'état de repos dans les une ou plusieurs petites stations de base cellulaires (104₁ à 104₅) à la réception du signal de réveil de l'équipement d'utilisateur (112) ou après un laps de temps configurable après la réception du signal de réveil ou à l'activation de la petite station de base cellulaire (104₁ à 104₅), et
mettre (218) une petite station de base cellulaire activée (104₁ à 104₅) à l'état de repos après expiration de la minuterie d'état de repos.

8. Procédé selon l'une des revendications 1 à 7, dans lequel la configuration de signal de réveil est fournie à l'équipement d'utilisateur (112) par une macro-station de base (100) ou une petite station de base cellulaire (104₁ à 104₅) du système de communication sans fil.

9. Procédé selon l'une des revendications 1 à 8, dans lequel le signal de réveil est l'un parmi
une séquence de préambules dans une couche physique, ou
une unité de description de protocole commandée par MAC, ou
un message de commande de ressources radio.

10. Produit de programme informatique non transitoire comprenant un support lisible par ordinateur qui mémorise des instructions qui, lorsqu'elles sont exécutées sur un ordinateur, réalisent le procédé selon l'une des revendications 1 à 9.

11. Equipement d'utilisateur (112) pour un système de communication sans fil comprenant une pluralité de petites stations de base cellulaires (104₁ à 104₅) et une ou plusieurs macro-stations de base (100, 100₁ à 100₄), dans lequel l'équipement d'utilisateur (112) est configuré pour
recevoir une configuration de signal de réveil,
transmettre un signal de réveil configuré selon la configuration de signal de réveil reçue pour faciliter l'activation d'une pluralité de types spécifiques de petites stations de base cellulaires (104₁ à 104₅),
détecter les signaux pilotes transmis par une ou plusieurs petites stations de base cellulaires activées en réponse au signal de réveil transmis par l'équipement d'utilisateur,
effectuer (208) des mesures des signaux pilotes détectés,
transmettre (210) les résultats de mesure à la macro-station de base (100),
recevoir de la macro-station de base une commande de reconfiguration de petite cellule indiquant une petite station de base cellulaire sélectionnée, et
établir (214), en réponse à la commande de reconfiguration de petite cellule reçue indiquant celle des petites stations de base cellulaires (104₁ à 104₅) qui doit être utilisée, une connexion avec les petites stations de base cellulaires indiquées (104₁ à 104₅).

12. Système de communication sans fil, comprenant:
une ou plusieurs macro-stations de base (100, 100₁ à 100₄); et
une pluralité de petites stations de base cellulaires (104₁ à 104₅) commandées par une ou plusieurs macro-stations de base (100, 100₁ à 100₄) pour servir un équipement d'utilisateur (112),
dans lequel, pour éveiller une ou plusieurs petites stations de base cellulaires à l'état de repos (104₁ à 104₅) pour servir l'équipement utilisateur (112), le système de communication sans fil est configuré pour fonctionner selon le procédé selon l'une des revendications 1 à 9.
